Europäisches Patentamt

(19) European Patent Office

Office européen des brevets

(11) Publication number: **0 155 137**
A2

(12) # EUROPEAN PATENT APPLICATION

(21) Application number: **85301511.3**

(22) Date of filing: **05.03.85**

(51) Int. Cl.⁴: **F 16 B 7/02,** F 16 B 7/10,
F 16 B 7/16, F 16 C 1/22

(30) Priority: **12.03.84 GB 8406381**

(71) Applicant: **WESTINGHOUSE BRAKE AND SIGNAL
COMPANY LIMITED, Pew Hill, Chippenham Wiltshire
(GB)**

(43) Date of publication of application: **18.09.85
Bulletin 85/38**

(72) Inventor: **Tregoning, Geoffrey Robinson, Whitegates
Stanley Lane, Pewsham Chippenham Wiltshire SNI5 3RF
(GB)**

(84) Designated Contracting States: **AT BE CH DE FR IT LI
LU NL SE**

(74) Representative: **Newstead, Michael John et al, Page &
Co. Temple Gate House Temple Gate, Bristol BS1 6PL
(GB)**

(54) **Clutches.**

㊼ A clutch having relatively tapered co-axial clutch faces
(3/4) one on each of a pair of clutch members (1/2) and between which faces (3/4) lies co-axially therewith a ring of
purled steel wire (6).

EP 0 155 137 A2

CLUTCHES

This invention relates to clutches and more particularly although not exclusively, to clutches suitable for incorporation into slack adjusters.

Purled steel wire is, of itself, well known and, indeed, has been so for many years but its use has, largely been restricted to very low technology applications such as net curtain rails. However, it has some very useful characteristics which have not so far been fully appreciated much less extensively utilised. In particular, it is cheap to manufacture - hence its use in context such as illustrated above; it is extremely rigid and will support very considerable loads in its cross-section whilst, being flexible and extensible in the direction of the length; and it is manufactured to a very high tolerance level. However, due to its traditional low technology application, it does not readily come to mind as a product utilisable in higher technologies.

In British Patent No. 565199, it has been prepared to use endless (as the term is used in that Patent) helical springs for clutch actuation. However, these springs were not formed of purled steel wire and, more importantly, were not used to provide the friction clutch faces but merely as members though which the clutch faces could be moved into engagement one with the other to "make" the clutch. Indeed, of course, in contrast to purled steel wire, the exterior surface of a simple helical spring would not be sufficient accurancy of manufacture nor of sufficient contact surface area as to be usable as a clutch face.

Clutches, are relatively high technology as compared to the traditional uses of purled steel wire and considerable investment is made in the design of and materials for clutch surface.

One form of clutch (and particularly a form commonly used in slack adjusters) is between co-axial relatively rotating and/or linearly movable parts and through which may be very heavy loading needs to be transmitted.

Purled steel wire has been found, surprisingly, to be suitable for such clutches.

Accordingly, the present invention provides a clutch having relatively tapered co-axial clutch faces, one on each of a pair of clutch members, and between which faces lies co-axially therewith a ring of purled steel wire.

Either the ring of purled steel wire or one of the clutch members may be the movable clutch element to "make" and "break" the clutch.

Preferably, the purled steel wire ring is resiliently loaded in the axial direction of the ring in the direction in which the clutch faces are tapered towards each other.

One embodiment of the present invention will now be described in greater detail, by way of example only with reference to the accompanying drawings of which:

Fig 1 is a transverse cross-sectional view of a clutch, and

Fig 2 is a broken side view partly in longitudinal cross-section of the clutch.

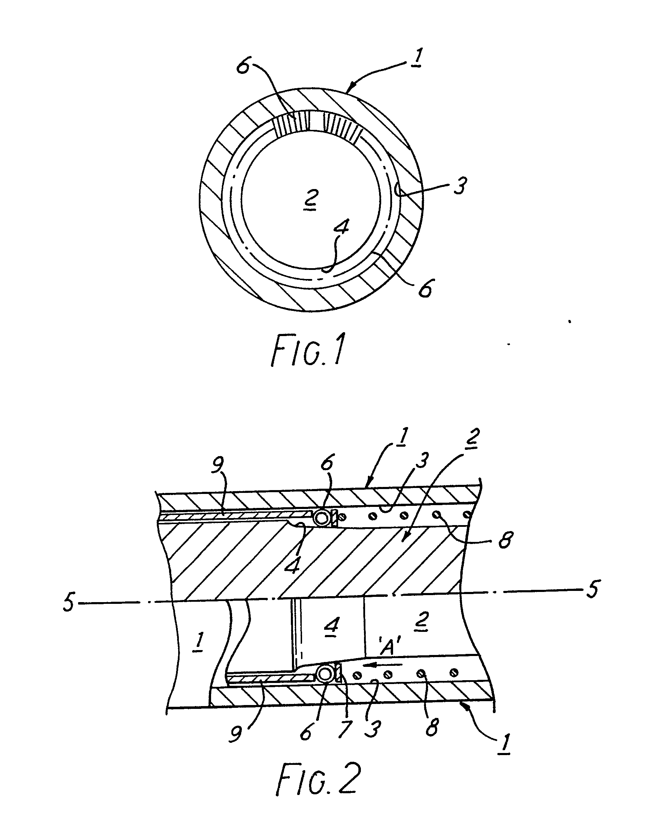

Referring to the drawings, the clutch comprises first and second clutch members 1 and 2 respectively. The internal cylindrical surface of the member 1 constitutes a first clutch face 3 and a generally conical exterior surface of the member 2 constitutes a second clutch face 4 which is co-axial with the clutch face 3 about the axis 5 and which, by virtue of the relative shapes of the clutch faces, tapers towards the clutch face 3 in the direction of arrow "A" in Fig 2.

Lying betwen the clutch faces 3 and 4 is a length of purled steel wire 6 (which, as is well known, is in the form of a tightly-coiled spring) which is resiliently loaded in the direction of arrow "A", through washer T by a spring 8 (Fig 2) also co-axial with the axis 5. As can be seen in Fig 1, the wire 6 forms a ring between the two clutch faces 3 and 4 the axis of which is again, co-axial with axis 5.

Positioned between the two members 1 and 2 is a clutch operating tube 9 movable in the direction opposite to arrow "A" to push the ring 6 out of clutching engagement with the clutch faces 3 and 4.

It will be seen from the above description that so long as the spring 8 is effective to "jam" the ring 6 onto the two clutch faces 3 and 4, the clutch is "made" with the member 1 clutched to the member 2 for movement together rotationally in either direction and/or linearly in the direction opposite to arrow "A". The clutch can be "broken" to de-clutch the members 1 and 2 from each other by movement of the clutch operating tube 9 in the direction opposite to arrow "A" to "un-jam" the ring 6 from the clutch faces 3 and 4.

Also, the clutch acts as a one-way clutch for linear movement, being "made" by movement of member 1 relative to the member 2 in the direction of arrow "A" and being "broken" by movement of the member 1 relative to the member 2 in the direction opposite to arrow "A".

It has been found that the purled steel wire will, when the clutch is "made" transmit through the clutch very considerable loadings both in linear and rotational movement of the members 1 and 2 whilst relatively little effort is needed to "break" the clutch by un-jamming the ring 6 from between the clutch faces 3 and 4.

5

<u>CLAIMS</u>

1. A clutch having relatively tapered co-axial clutch faces (3/4) one on each of a pair of clutch members (1/2) and between which faces (3/4) lies co-axially therewith a ring of purled steel wire (6).

2. A clutch according to Claim 1, wherein the ring (6) constitutes the movable clutch element to "make" and "break" the clutch.

3. A clutch as claimed in either Claim 1 or Claim 2, wherein the ring (6) is resiliently loaded (by 8) in the axial direction of the ring in the direction in which the clutch faces are tapered towards each other.

4. A clutch as claimed in any one of the preceding claims, wherein one of the clutch faces (4) is conical and the other (1) is cylindrical.

5. A clutch susbstantially as herein described with reference to and as illustrated in the accompanying drawings.

FIG.1

FIG.2